# EUROPÄISCHE PATENTSCHRIFT

(11) **EP 1 275 757 B1**
(45) Veröffentlichungstag und Bekanntmachung des Hinweises auf die Patenterteilung: **05.05.2010**
(21) Anmeldenummer: 02015426.6
(22) Anmeldetag: 11.07.2002
(51) Int. Cl.: D01D 5/24

(54) **Röhrchen mit Innendurchmessern im Nanometerbereich**
Tubes with inside diameters on the nanometric scale
Tubes avec diamètres intérieurs à l'échelle nanométrique

(30) Priorität: 13.07.2001 DE 10133393
(43) Veröffentlichungstag der Anmeldung: 15.01.2003
(73) Patentinhaber: Transmit Gesellschaft für Technologietransfer mbH, 35394 Giessen (DE)
(72) Erfinder: Hou, Haoqing, Dr., 35059 Marburg (DE); Zeng, Jun, 35039 Marburg (DE); Greiner, Andreas, Prof.Dr., 35287 Amöneburg (DE); Wendorff, Joachim H., Prof. Dr., 35043 Marburg (DE); Averdung, Johannes, Dr., 45894 Gelsenkirchen (DE); Landwehr, Dierk, Dr., 48249 Dülmen (DE)
(74) Vertreter: Buchhold, Jürgen

(56) Entgegenhaltungen:
- WO-A-01/09414
- WO-A-02/34986

## Beschreibung

Die Erfindung betrifft Nanoröhren, d. h. Röhren oder Hohlfasern mit einem Innendurchmesser im nanometer-Bereich, ein Verfahren zu deren Herstellung und die Verwendung dieser Röhren bzw. Hohlfasern.

Als Hohlfasern, Meso- oder Nanoröhren werden allgemein Röhren mit einem Innendurchmesser von unter 0.1 mm bezeichnet.

Röhren oder Hohlfasern mit kleinem Innendurchmesser sind bekannt und werden insbesondere für Trennzwecke z. B. in der medizinischen Dialyse, für die Gasseperation oder Osmose von wäßrigen Systemen, z. B. zur Wasseraufbereitung eingesetzt (s. Kirk Othmer, Encyclopedia of Chemical Technology, 4 Ed. Vol 13, S. 312-313). Das Fasermaterial besteht meist aus Polymeren, die darüber hinaus Poren, d. h. Eigenschaften von semipermeablen Membranen besitzen können. Die zu Trennzwecken verwendeten Hohlfasern weisen meist eine Oberfläche von 100 cm² pro cm³ Volumen mit einem Innendurchmesser von 75 µm bis 1 mm auf.

Eine weitere Anwendung von Hohlfasern ist die Mikroelektronik. Hier werden supraleitende, ca. 60 µm im Durchmesser betragende Fasern aus supraleitendem Material hergestellt, indem Hohlfasern aus Polymeren mit einer Masse gefüllt werden, die nach thermischem Abbau des Polymeren supraleitende Eigenschaften besitzt (J.C. W. Cien, H. Rinsdorf et al., Adv. Mater., 2 (1990) S. 305).

Röhren mit kleinem Innendurchmesser werden in der Regel durch Extrusionsspinnverfahren hergestellt; eine Reihe von Extrusionsspinnverfahren sind in Kirk-Othmer, Encyclopedia of Chemical Technology, 4. Ed. Vol. 13, S. 317-322 beschrieben.

Mit Hilfe von Extrusionsspinnverfahren können Hohlfasern mit einem Innendurchmesser von bis zu 2 µm hergestellt werden. Die Herstellung von Hohlfasern mit kleineren Innendurchmessern ist mit diesen Verfahren nicht möglich.

Zur Herstellung von sehr dünnen Fasern ohne Hohlraum kann die Elektrospinning-Technik (Electrostatic Spinning) eingesetzt werden. Hier werden Polymerschmelzen oder Polymerlösungen in einem elektrischen Feld durch Kanülen unter einem geringen Druck extrudiert. Grundlagen dieser Technik können z. B. in EP 0 005 035, EP 0 095 940, US 5 024 789 oder WO 91/01695 nachgeschlagen werden. Mit Hilfe des Elektrospinningverfahrens können massive Fasern mit einem Durchmesser von 10-3000 nm hergestellt werden; die Herstellung von Hohlfasern ist jedoch auch mit dieser Technik nicht möglich.

Hohlfasern mit einem sehr kleinen Innendurchmesser sind bisher nur durch elektrochemische Synthese, so beschrieben in L. A. Chernozantonskii, Chem. Phys. Lett. 297, 257, (1998), durch die Methoden der Supramolekularen Chemie (S. Demoustier - Champagne et al., Europ. Polym. J. 34, 1767, (1998) oder mit selbst-organisierenden Membranen als Template (E. Evans et al. Science, Vol 273, 1996, S. 933-995) zugänglich. Carbonhohlfasern auf Basis der Fullerenchemie (Kohlenstoff-Nanoröhrchen mit ein- und mehrwandigen Strukturen aus einer einzelnen aufgerollten Graphitschicht (Schicht aus allseitig aneinander kondensierten Kohlenstoff-Sechsringen) oder konzentrisch angeordneten Graphitzylindern sind z. B. in "Fullerenes and related Structures", Ed. A. Hirsch, Springer Verlag 1999, S. 189-234 oder N. Grobert, Nachr. Chem. Tech. Lab., 47, (1999), 768-776 beschrieben.

Diese Methoden sind jedoch nur auf spezielle Materialien anwendbar und können zur Herstellung von technisch verwertbaren, d. h. mechanisch und chemisch stabilen Hohlfasern nicht eingesetzt werden.

Hohlfasern mit Innendurchmessern im µm-Bereich sind bekannt. So offenbaren WO 97/26225, EP 0 195 353 und US 5 094 906 Hohlfasern aus keramischen Materialien mit einem Innendurchmesser von mindestens 1 µm; Hohlfasern aus Metallen mit einem Innendurchmesser von 1-1000 µm sind in FR 12 11 581 und DE 28 23 521 beschrieben.

WO 01/09414 offenbart, ebenso wie die WO 02/34986 A, Meso- und Nanoröhren mit Innendurchmessern im Bereich 10 nm bis 50 µm, die bevorzugt durch Elektrospinning hergestellt werden. Das hier offenbarte Elektrospinning-Verfahren ermöglicht jedoch nicht die Herstellung von kleineren Fasern, da sich bei größeren Verdünnungen des zu verspinnenden Materials unregelmäßige Fäden mit Verdickungen bilden.

Für viele Anwendungen z. B. bei der Trennung von Gasen wäre es erwünscht, Hohlfasern mit sehr kleinen Außen- und/oder Innendurchmessern aus verschiedenen, auf das jeweilige Einsatzgebiet abgestimmten Materialien einzusetzen. Insbesondere sollen die Materialien thermisch, mechanisch und chemisch belastbar sein, gegebenenfalls eine poröse Struktur aufweisen, wahlweise elektrische Leiter oder Isolatoren sein und aus Polymeren, Anorganika oder Metallen bestehen.

Aufgabe der vorliegenden Erfindung war es daher, Hohlfasern aus technisch anwendbaren Materialien mit einem Innendurchmesser im nm-Bereich bereitzustellen.

Überraschenderweise wurde gefunden, das Hohlfasern mit einem Innendurchmesser in den gewünschten Dimensionen präzise und aus den verschiedensten Materialien wie Polymeren, Anorganika oder sogar Metallen hergestellt werden können.

Gegenstand der vorliegenden Erfindung sind Hohlfasern mit einem Innendurchmesser von 1 nm bis 100 nm und einer Außenwand, aufgebaut aus metallhaltigen anorganischen Verbindungen, Metallen und/oder Polymeren, wobei die Hohlfasern durch ein Verfahren hergestellt werden, umfassend die Schritte
■ Herstellung einer Faser aus einem ersten abbaubaren Material, welches 10 bis 60 Gew.-% Edelmetalsalze und/oder zusätzlich eine basische Verbindung enthält,
■ Beschichten der ersten Faser mit mindestens einem weiteren Material,
■ Abbauen des ersten Materials.

Die erfindungsgemäßen Hohlfasern weisen bevorzugt Innendurchmesser von 1 nm bis 10 nm, besonders bevorzugt 1 nm bis 9 nm, ganz besonders bevorzugt 1 nm bis 5 nm.

Die Länge der Hohlfasern ist vom Verwendungszweck bestimmt und beträgt in der Regel 50 µm bis zu mehreren mm oder cm.

Die Wandstärke, d. h. die Dicke der Außenwände der Hohlfasern ist variabel und beträgt in der Regel 1 bis 500 nm, bevorzugt 1 bis 100 nm, besonders bevorzugt 10 bis 25 nm.

Hohlfasern gemäß der vorliegenden Erfindung weisen neben den sehr kleinen Innendurchmessern eine Reihe von Eigenschaften auf, die sie für eine Verwendung in den Bereichen Medizin, Elektronik, Katalyse, chemische Analytik, Gasseparation, Osmose oder der Optik geeignet machen.

So können die Außenwände der erfindungsgemäßen Hohlfasern aus den unterschiedlichsten Materialien aufgebaut sein, wie zu Beispiel aus Polymeren, Metallen oder metallhaltigen anorganischen Verbindungen. Die Außenwände können eine Schicht dieser Materialien aufweisen, d. h. vollständig aus diesen bestehen oder mehrere Schichten aus den gleichen oder unterschiedlichen Materialien besitzen. Der sehr kleine Innendurchmesser sorgt für ein sehr hohes Verhältnis von Oberfläche zum Volumen der Hohlfasern; dieses kann zwischen 500 und 2.000.000 cm²/cm³, bevorzugt 5.000 bis 1.000.000 cm²/cm³, besonders bevorzugt 5.000 bis 500.000 cm²/cm³ betragen.

Die metallhaltigen, anorganischen Verbindungen der erfindungsgemäßen Hohlfasern sind z.B. Metalloxide, Metalhnischoxide, Spinelle, Metallnitride, Metallsulfide, Metallcarbide, Metallaluminate oder -titanate. Borverbindungen und mit Metallen dotierte Kohlenstoff-Nanoröhrchen mit ein- und mehrwandigen Strukturen aus einer einzelnen aufgerollten Graphitschicht (Schicht aus allseitig aneinander kondensierten Kohlenstoff-Sechsringen) oder konzentrisch angeordneten Graphitzylindern sind keine metallhaltigen Verbindungen im Sinne der vorliegenden Erfindung. Ebenfalls keine metallhaltigen Verbindungen im Sinne der vorliegenden Erfindung sind den Kohlenstoff-Nanoröhrchen ähnliche Materialien, mit konzentrisch angeordneten polyhedralen oder zylindrischen Schichtstrukturen wie z. B. WS₂, MoS₂ und VS₂.

Polymere im Sinne der vorliegenden Erfindung sind Polykondensate, Polyadditionsverbindungen oder Polymerisate, jedoch keine graphitähnlichen Verbindungen aus reinem oder dotierten Kohlenstoff.

Weiterhin ist ein Verfahren zur Herstellung der Hohlfasern Gegenstand der vorliegenden Erfindung.

Das Verfahren zur Herstellung der erfindungsgemäßen Hohlfasern kann ausgeübt werden, indem eine Faser aus einem ersten, abbaubaren Material mindestens eine Beschichtung aus mindestens einem weiteren Material erhält und anschließend das erste Material mit der Maßgabe abgebaut wird, daß die so erhaltene Hohlfaser einen Innendurchmesser von 1 nm bis 100 nm aufweist, wobei das erste abbaubare Material 10 bis 60 Gew.-% Edelmetallsalze enthält und/oder zusätzlich eine basische Verbindung enthält.

In einer Verfahrensvariante kann dem ersten, abbaubaren Material 0,1 - 10 Gew.-% einer basischen Verbindung wie Pyridin zugesetzt werden. Dies ist bei Verwendung von Polyamiden bevorzugt, und kann z. B. als Lösungsmittelzusatz beim Elektrospinning verwendet werden. In einer anderen Variante werden dem abbaubaren Material 10-60 Gew.-%, bevorzugt 25-50 Gew.-% eines Edelmetallsalzes zugesetzt. Bevorzugt werden Platin-, Nickel-, Cobalt-, Rhodium-, Palladiumsalze von organischen Säuren wie Acetat oder Formiat eingesetzt. Es ist auch möglich, die im Folgenden genannten Metalle der Gruppen I bis XIII, a und b des Periodensystems zuzusetzen. Diese Variante ermöglicht die Herstellung von Nanoröhren, die kleine Edelmetallkristalle an der Innenwand aufweisen. Diese Nanoröhren sind insbesondere als Katalysatoren geeignet. Es ist möglich, beide Varianten gleichzeitig anzuwenden.

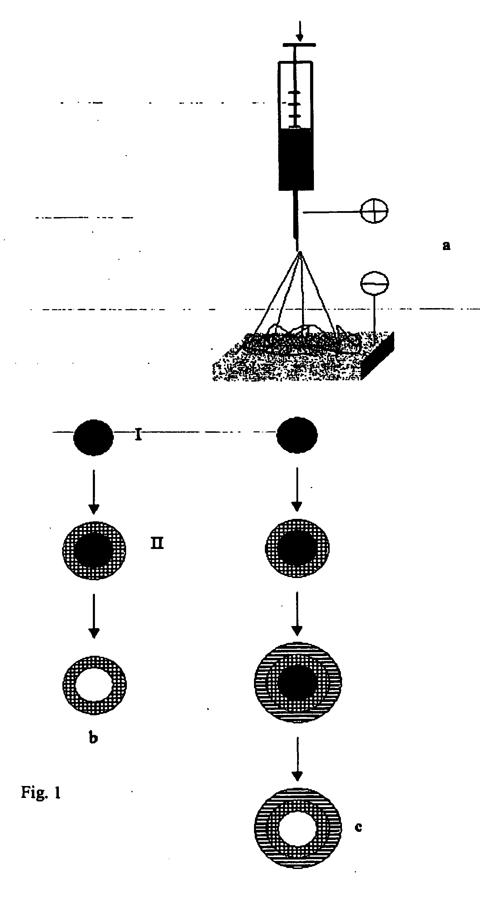

In Fig. 1 b und c) sind mögliche Ausführungsformen der Hohlfasern und des Verfahrens zu deren Herstellung skizziert.

In einer Variante wird zunächst eine Faser (Fig. 1b, I) aus einem ersten, abbaubaren Material beschichtet (Fig 1b, II). Diese Faser kann aus einem thermisch, chemisch, strahlenchemisch, physikalisch, biologisch, mit Plasma, Ultraschall oder durch Extraktion mit einem Lösungsmittel abbaubaren Material bestehen. Zur Herstellung dieser Fasern kann die Elektrospinning-Technik eingesetzt werden.

Details zur Elektrospinning-Technik können z. B. in D. H. Reneker, I. Chun., Nanotechn. 7 216 (1996) nachgelesen werden. Der prinzipielle Aufbau einer Elektrospinning-Apparatur ist Fig. 1a zu entnehmen.

Der Durchmesser der abbaubaren Fasern sollte in der gleichen Größenordnung liegen wie der später gewünschte Innendurchmesser der Hohlfasern. In der Regel ist der spätere Hohlraum der Hohlfasern ungefähr gleich groß wie der Durchmesser der abbaubaren Fasern, bzw. Beschichtungen. Die genaue Dimensionierung hängt von den verwendeten Materialien bzw. deren Veränderungen während des Abbauprozesses ab und kann durch orientierende Versuche. unschwer ermittelt werden.

Als abbaubare Fasermaterialien können organische oder anorganische Materialien, insbesondere Polymere wie Polyester, Polyether, Polyolefine, Polycarbonate, Polyurethane, natürliche Polymere, Polylactide, Polyglycoside, Poly-α-Methylstyrol und/oder Polyacrylnitrile, eingesetzt werden. Die Elektrospinning-Technik erlaubt weiterhin die Herstellung von Multikomponentenfasern, d. h. Fasern mit unterschiedlichen Materialien in unterschiedlichen Schichten oder Fasern mit bestimmter Oberflächentopographie, d. h. mit glatten oder porösen Oberflächen.

Die Oberflächenbeschaffenheit der Faser bzw. Schicht aus dem abbaubaren Material bestimmt auch die Oberflächentopographie der folgenden Beschichtungen. Wird z. B. eine rauhe oder mikrostrukturierte Innenseite der Hohlfaser gewünscht, so kann dies durch eine entsprechend rauhe Faser aus einem abbaubaren Material erreicht werden. Rauhe oder mikrostrukturierte Fasern können durch die Elektrospinntechnik durch Verarbeitung einer Polymerlösung mit einem leicht verdampfbaren Lösungsmittel erhalten werden. Weiterhin können Zusätze wie Salze, z. B. Natriumsulfat, metallische Nanopulver, leitfähige Polymere wie Polypyrrole oder Graphit die Leitfähigkeit des versponnenen Materials deutlich erhöhen.

Die Beschichtung mit dem mindestens einen weiteren nicht abbaubaren Material kann durch Gasphasenabscheidung, Plasmapolymerisation oder durch Aufbringen des Materials in einer Schmelze oder in Lösung erfolgen. Die Beschichtung kann in verschiedenen Schichten und mit verschiedenen Materialien erfolgen und bildet die Außenwand der Hohlfaser.

Diese Beschichtung, d. h. der Aufbau der Außenwand kann z. B. durch Gasphasenabscheidung, Rakeln, Spin-Coating, Dip-Coating, Besprühen oder Plasmaabscheidung von Polymeren wie Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten, Siliconen, vollaromatischen Copolyestern, Poly-N-vinylpyrrolidon, Polyhydroxyethyhnethacrylat, Polymethylmethacrylat, Polyethylenterephthalat, Polybutylentherephthalat, Polymethacrylnitril, Polyacrylnitril, Polyethylenterephthalat, Polybutylentherephthalat, Polymethacrylnitril, Polyacrylnitril, Polyvinylacetat, Neopren, Buna N, Polybutadien, Polytetrafluorethen, Cellulose (modifiziert oder nichtmodifiziert), Alginate oder Collagen, deren Homo- oder Coploymerisate und/oder Blends erfolgen.

Weiterhin können die abbaubaren Schichten bzw. Fasern mit einem weiteren Material beschichtet werden, das durch Polymerisation, Polykondensation oder Polyaddition eines oder mehrerer Monomeren erhalten wird. Geeignete Monomere für die Mono- oder Copolymerisation, -addition oder -kondensation sind z. B. Methacrylat, Styrol, Styrolsulfonat, 1,6-Hexamethylendiisocyanat (HDI), 4.4'-Methylenbiscyclohexyldiisocyanat (HMDI), 4,4'-Methylenbis-(benzyldiisocyanat) (MDI), 1,4-Butandiol, Ethylendiamin, Ethylen, Styrol, Butadien, Buten-1, Buten-2, Vinylalkohol, Acrylnitril, Methylmethacrylat, Vinylchlorid, Fluorierte Ethylene oder Therephthalate.

Die Beschichtung, d. h. der Aufbau der Außenwand der Hohlfasern kann aus Metallen der Gruppen Ia, Ib, IIa, IIb, IIIa, IIIb, IVa, IVb, Vb, VIb, VIIb und/oder VIIIb des Periodensystems jeweils als Reinmetall oder Legierung bestehen. Geeignete Metalle sind beispielsweise Gold, Palladium, Aluminium, Platin, Silber, Titan, Kobalt, Ruthenium, Rhodium, Natrium, Kalium, Calzium, Lithium, Vanadium, Nickel, Wolfram, Chrom, Mangan und/oder Silicium. Die Beschichtung kann durch Bedampfen mit den Metallen oder durch Zersetzung geeigneter metallorganischer Verbindungen mit CVD-Verfahren erfolgen.

Polymere Beschichtungsmaterialien können weiterhin funktionelle Gruppen wie Ester, Amide, Amine, Silylgruppen, Siloxangruppen, Thiole, Hydroxylgruppen, Urethangruppen, Carbamatgruppen, Nitrilgruppen, C=C-Gruppen, C≡C-Gruppen, Carbonsäurehalogenidgruppen, Sulfoxidgruppen, Sulfongruppen, Pyridylgruppen, Arylphosphingruppen oder auch ionische Gruppen wie Carbonsäuren, Sulfonsäuren oder quartäre Amine tragen. Die funktionellen Gruppen können an der Innen- und/oder Außenseite der Hohlfasern angebracht sein und die Oberflächeneigenschaften der Hohlfasern bei Trennoder Osmoseverfahren verbessern. Die funktionellen Gruppen können auch nachträglich durch polymeranaloge Umsetzungen chemisch verändert werden (z. B. Verseifen von Estern).

Durch eine entsprechende Funktionalisierung können auch Wirkstoffe wie Antibiotika, Anästhetika, Proteine wie Insulin, Antifouling Agentien, Agrochemikalien wie Herbizide oder Fungizide reversibel in den Hohlfasern fixiert und/oder langsam mit konstanter Konzentration wieder abgegeben (Controlled bzw. Slow-Release) werden.

Die Außenwand der Hohlfasern, d. h. das nicht-abbaubare weitere Material kann auch aus Glas, Glaskeramiken, SiOₓ, Perowskit, Keramiken, Aluminiumoxiden oder Zirkoniumoxiden, optional aus Siliziumkarbid, Bornitrid, Kohlenstoff sowie Metalloxiden aufgebaut sein. Hier bieten sich ebenfalls Gasphasenabscheideverfahren (CVD oder PVD) oder auch Hydrothermalverfahren an.
Geeignet sind Perowskite der allgemeinen Formel

LaXYMgO

mit

X = Ca, Sr, Ba

Y = Ga, Al

(ohne Stöchiometrie), die sauerstoffionenleitende Eigenschaften besitzen.

Der Abbau des abbaubaren Materials kann thermisch, chemisch, strahleninduziert, biologisch, photochemisch, durch Plasma, Ultraschall, Hydrolyse oder durch Extraktion mit einem Lösungsmittel erfolgen. In der Praxis hat sich der thermische Abbau bewährt. Die Zersetzungsbedingungen liegen je nach Material bei 100-500 °C und 0.001 mbar bis 1 bar, besonders bevorzugt bei 0.001 bis 0.1 mbar. Durch den Abbau des Materials wird eine Hohlfaser erhalten, deren Wandmaterial aus den Beschichtungsmaterialien besteht.

Wie in Fig. 1 b und c gezeigt, können auch mehrere Schichten aus verschiedenen Materialien auf die Faser aufgebracht werden. Es werden so Hohlfasern erhalten, die unterschiedliche Innen- und Außenwände aufweisen bzw. die Außenwände der Hohlfasern können aus mehreren Schichten aufgebaut werden. Die unterschiedlichen Schichten können unterschiedliche Funktionen erfüllen; so kann die innere Schicht besondere Trenneigenschaften für z. B. chromatographische Zwecke und die äußere Schicht eine hohe mechanische Stabilität aufweisen.

Beispielhaft seien die folgenden Schichtabfolgen der erfindungsgemäßen Hohlfasern genannt:
Glas / Metall
Metall / Glas
Glas / Polymer
Polymer / Glas
Polymer / Polymer
Metall / Metall
Metallhaltige anorganische Verbindung / Metallhaltige anorganische Verbindung
Keramik / Keramik
Polymer / Metall
Metall / Polymer
Keramik / Polymer
Polymer / Keramik
Metall / Keramik
Keramik / Metall
Polymer / Metall / Polymer
Metall / Polymer / Metall
Metall / Keramik / Metall
Polymer / Keramik / Polymer
Keramik / Polymer / Keramik
Polymer / Glas/Polymer
Glas / Polymer / Glas

Erfindungsgemäße Hohlfasern können insbesondere als Separations- oder Speichermedium für Gase, Flüssigkeiten oder Partikelsuspensionen und zur Filtration oder Reinigung von Stoffgemischen verwendet werden. Hier bietet sich der Einsatz als Membrane für Gase, insbesondere H₂ oder Flüssigkeiten, zur Partikelfiltration, in der Chromatographie, zur Öl/Wassertrennung, als Ionenaustauscher in der Dialyse, zur Größenseparation von Zellen, Bakterien oder Viren, als Bestandteil einer künstlichen Lunge, zur Entsalzung zur Ent- oder Bewässerung oder als Filter zur Entwässerung von Treibstoffen an.

Weiterhin können erfindungsgemäße Hohlfasern in der Sensorik für Lösungsmittel-, Gas-, Feuchte- oder Biosensoren, in der Kapillarelektrophorese, in katalytischen Systemen, in der Rastersondenmikroskopie oder als Werkstoffe in der Superleichtbauweise, als mechanische Verstärkung analog zu Glasfasern, als Schall- oder Schwingungsschutz als Verbundwerkstoff oder Füllstoff, als Controlled-Release- oder Drug-Delivery-System, in medizinischen Separationstechniken, in der Dialyse, als künstliche Lunge, Proteinspeicher oder im Tissue Engineering verwendet werden.

In der Bekleidungs-/Textilindustrie können die erfindungsgemäßen Hohlfasern als Wärmeisolator in Kleidung oder Schlafsäcken, in photo- oder thermochromer Bekleidung durch Einbetten von Farbstoffen im Röhreninnern oder als Kennzeichner durch Marker im Röhreninneren verwendet werden.

Außerdem finden erfindungsgemäße Hohlfasern in der Elektronik, Optik oder der Energiegewinnung Verwendung. So können aus den Hohlfasern Drähte, Kabel oder Kapazitäten, Mikromaschinen (z. B. für piezoelektrische Verformung, Nanoperistaltikpumpen oder zur Verformung von photoadressierbaren Polymeren) oder Interlayer Dielektrika, hergestellt werden. Weitere Verwendungen für erfindungsgemäße Hohlfasern sind Mikroreaktoren z. B. für katalytische Reaktionen, Templatereaktionen und Bioreaktoren, die Wärmeerzeugung durch Umwandlung von Sonnenlicht (Solar-α-Systeme), in der Chiptechnologie als flexible Devices oder Mikroskopie als Sensorbestandteil (z. B. als Spitzen oder Sonden für Rastersondenmikroskope oder SNOM-Geräte).

Die erfindungsgemäßen Hohlfasern weisen eine sehr niedrige Dielektrizitätskonstante auf und können daher auch als Dielektrikum, insbesondere als Interlayer-Dielektrikum in elektronischen Bauteilen, z. B. bei der Chipherstellung verwendet werden. Bei der Produktion neuer Chip-Generationen mit noch kleineren Dimensionen bzw. höheren Speicherdichten sind Interlayer-Dielektrika mit einer niedrigen Dielektrizitätskonstante wichtig. Die erfindungsgemäßen Hohlfasern weisen aufgrund des hohen Anteils an umschlossener Luft pro Volumen einen DK-Wert von kleiner als 4, bevorzugt kleiner 3, ganz besonders bevorzugt kleiner 2 und im Idealfall kleiner 1.5 auf.

Die Hohlfasern werden für die Verwendung als Dielektrikum bevorzugt als Flies oder Matte eingesetzt.
Durch die große Oberfläche der erfindungsgemäßen Hohlfasern können diese auch in Brennstoffzellen, Batterien oder in elektrochemischen Reaktionen verwendet werden. Vorteilhaft besteht die Außenwand der Hohlfasern für solche Verwendungen aus Sauerstoffionenleitern wie z. B. Perowskiten. Bei Oxidationsreaktionen können die Hohlfasern vom Edukt (z. B. einem Olefin) umspült werden, während durch die Hohlräume der Fasern Sauerstoff geleitet wird. Das Oxidationsprodukt wird außen an den Hohlfasern gebildet und abgeführt.

Die erfindungsgemäßen Hohlfasern können als katalytisches System verwendet werden. So können beispielsweise Hohlfasern aus Edelmetallen wie Platin oder Palladium als Entstickungskatalysatoren in Kraftfahrzeugen eingesetzt werden.

Erfindungsgemäße Hohlfasern aus zellverträglichen Materialien oder mit entsprechend modifizierten Oberflächen können in Zellmembranen eingebunden oder eingeführt werden und für die Separation sowie Gewinnung oder Entnahme von Stoffwechselmetaboliten, Enzymen und anderen Komponenten des Zytoplasmas innerhalb von Zellen oder zytoplasmatischen Komponenten verwendet und damit für die Gewinnung von Biopharmaka eingesetzt werden.

Die folgenden Beispiele sollen die Erfindung näher erläutern, ohne ihren Umfang zu beschränken.

### Beispiel 1

### Herstellung von Polylactid-Templatfasern durch Electrospinning

Eine 5% ige Lösung von Poly-L-lactid in Dichlormethan (Leitfähigkeit < 10⁻⁷ µS/cm) mit 50 Gew.-% Pd(OAc)₂, bezogen aus das Polylactid wurde in der in Abb. 1 gezeigten Electrospinnapparatur bei einer Spannung von 48 kV versponnen. Der Abstand der Kanülenspitze (Durchmesser 0.3 mm) von der Substratplatte (Glas) betrug 10 cm. Die Fasern wurde ohne weitere Behandlung weiterverwendet. Eine rasterelektronenmikroskopische (SEM) Aufnahme der Fasern ist in Fig. 2 gezeigt. Fig. 3 zeigt eine TEM-Aufnahme des so erhaltenen Materials.

### Beispiel 2

### Herstellung von Polylamid-Templatfasern durch Electrospinning

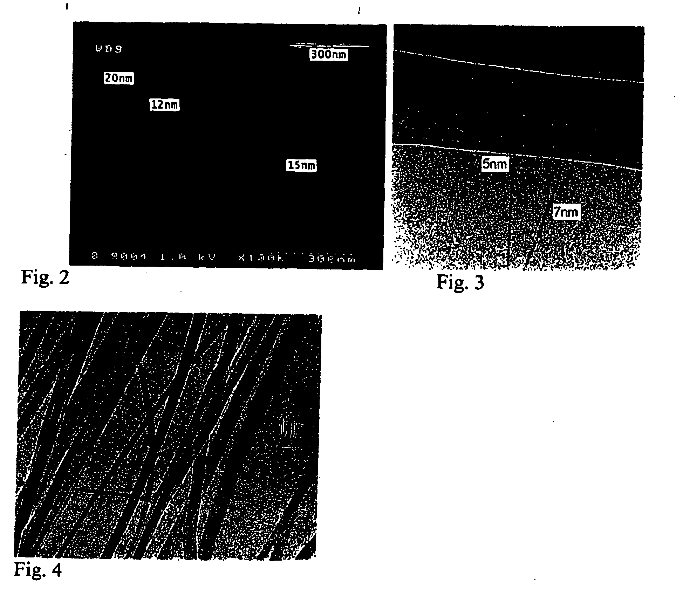

Eine 8%-ige Lösung von Polyamit 46 mit 2 Gew.-% Pyridin, bezogen auf PA 46 in Ameisensäure wurde in der in Abb. 1 gezeigten Electrospinnapparatur bei einer Spannung von 55 kV versponnen. Der Abstand der Kanülenspitze (Durchmesser 0.3 mm) von der Substratplatte (Glas) betrug 15 cm. Die Fasern wurde ohne weitere Behandlung weiterverwendet. Eine TEM-Aufnahme der Fasern ist in Fig. 4 gezeigt.

### Beispiel 3

### Herstellung von Poly(p-xylylen)-Hohlfasern durch Beschichtung aus der Gasphase

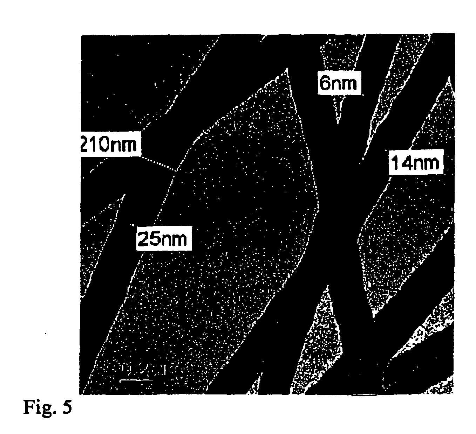

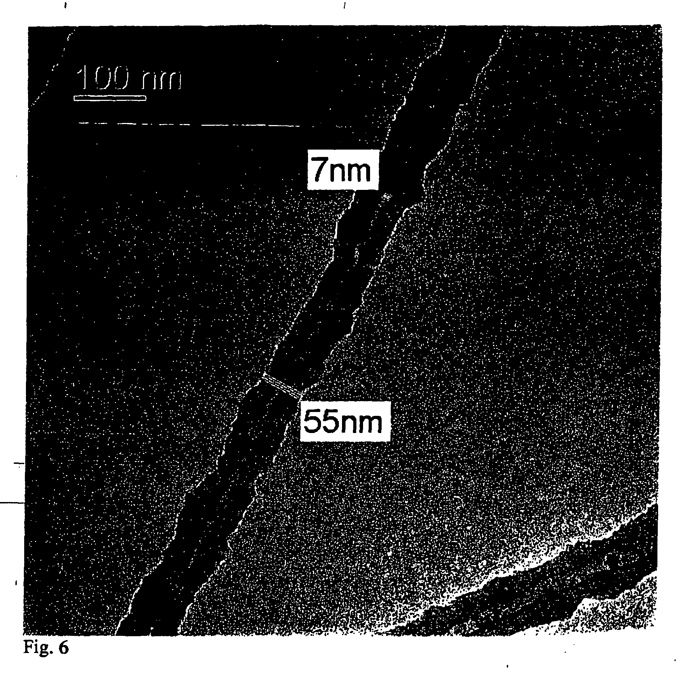

Polylactid-Templatfasern, hergestellt durch Electrospinning gemäß Beispiel 1 wurden in eine Gasphasenabscheidungsapparatur plaziert. Anschließend wurden 37 mg analysenreines [2.2]Paracyclophan bei 220°C/0.1 mbar verdampft und bei 800°C pyrolysiert wodurch sich im Probenraum bei ca 20°C Poly(p-xylylen) (PPX) bildete. Das Poly(p-xylylen)/Polylactid Compositgewebe wurde 12 Stunden mit Chloroform extrahiert. Die Bildung von Poly(pxylylen)-Hohlfasern mit einem Innendurchmesser von ca 6 bis 20 nm konnte durch Rasterelektronenmikroskopie belegt werden (Fig. 5, 6).

### Beispiel 4

### Herstellung von Poly(p-xylylen)-Hohlfasern durch Beschichtung aus der Gasphase

Polylamid-Templatfasern, hergestellt durch Electrospinning gemäß Beispiel 2 wurden in eine Gasphasenabscheidungsapparatur plaziert. Anschließend wurden 37 mg analysenreines [2.2]Paracyclophan bei 220°C/0.1 mbar verdampft und bei 800°C pyrolysiert wodurch sich im Probenraum bei ca 20°C Poly(p-xylylen) (PPX) bildete.

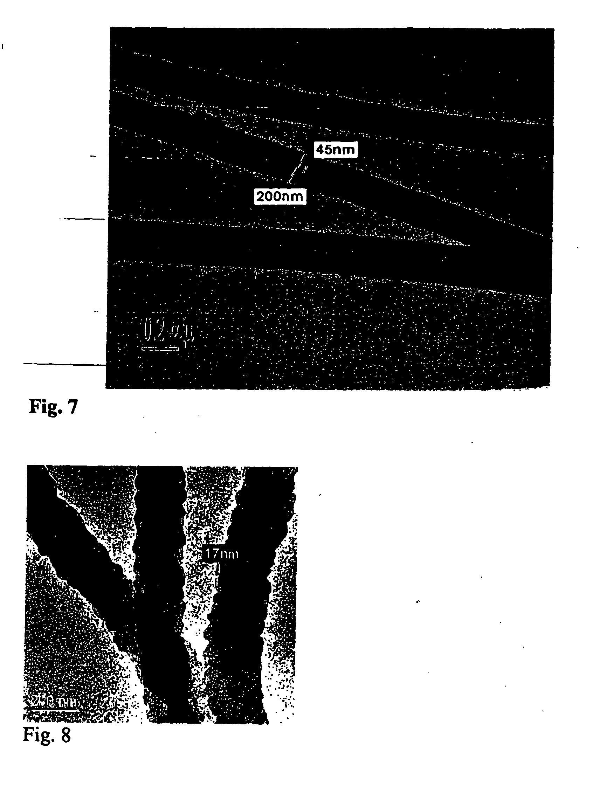

Das Poly(-xylylen)/Polyamid-Composit wurde 24 Stunden mit Ameisensäure extrahiert. Die Bildung der Hohlfasern mit einem Innendurchmesser von 45 nm kann der TEM-Aufnahme in Fig. 7 entnommen werden.

### Beispiel 5

### Herstellung von Poly(p-xylylen)/Hohlfasern durch Beschichtung aus der Gasphase

Polylactid-Templatfasern hergestellt durch Electrospinning gemäß Beispiel 1 wurden in eine Gasphasenabscheidungsapparatur plaziert. Anschließend wurden 40 mg analysenreines [2.2]Paracyclophan bei 220 °C/0.1 mbar verdampft und bei 700 °C pyrolysiert, wodurch sich im Probenraum bei ca 20°C Poly(p-xylylen) bildete. Das Poly(p-xylylen)/Polylactid Compositgewebe wurde in einem Vakuumofen bei 285°C/0.01 mbar 8 Stunden thermisch behandelt. Die Bildung von Poly(p-xylylen)/Hohlfasern mit einem mittleren Innendurchmesser von ca 17 nm konnte durch Rasterelektronenmikroskopie belegt werden (Fig. 8).

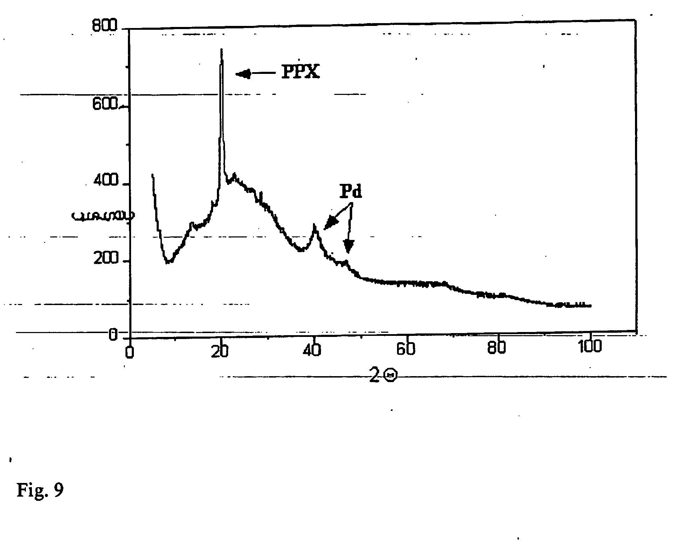

Durch den thermischen Abbau werden auf die Innenwand der Röhrchen Palladium-Kristallite mit einer Größe von 4-10 nm erhalten (s. Fig. 8). Durch FTIR Spektroskopie konnte der Abbau des Polylactids belegt werden; die Umwandung von Palladiumacetat zu metallischem Palladium ist durch Röntgenspektroskopie (WAXS, Fig. 9) nachgewiesen.

## Patentansprüche

1. Hohlfasern mit einem Innendurchmesser von 1 nm bis 100 nm und einer Außenwand, aufgebaut aus metallhaltigen anorganischen Verbindungen, Polymeren und/oder Metallen **dadurch gekennzeichnet, dass** die Hohlfasern nach einem Verfahren hergestellt werden, umfassend die Schritte
■ Herstellen einer Faser aus einem ersten abbaubaren Material, welches 10 bsi 60 Gew.-% Edelmetallsalze und/oder zusätzlich eine basische Verbindung enthält,
■ Beschichten der ersten Faser mit mindestens einem weiteren Material,
■ Abbauen des ersten Materials.

2. Hohlfasern nach Anspruch 1,
**dadurch gekennzeichnet,**
**dass** der Innendurchmesser 1 nm bis 10 nm beträgt.

3. Hohlfasern nach Anspruch 1 oder 2,
**dadurch gekennzeichnet,**
**dass** die Außenwand der Hohlfasern aus Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten, Siliconen, vollaromatischen Copolyestern, Poly-N-vinylpyrrolidon, Polyhydroxyethylmethacrylat, Polymethylmethacrylat, Polyethylenterephthalat, Polybutylentherephthalat, Polymethacrylnitril, Polyacrylnitril, Polyvinylacetat, Neopren, Buna N, Polybutadien, Polytetrafluorethen, Cellulose (modifiziert oder nichtmodifiziert), Alginaten oder Collagen, deren Homo- oder Copolymerisaten und/oder Blends aufgebaut ist.

4. Hohlfasern nach Anspruch 1 oder 2,
**dadurch gekennzeichnet,**
**dass** die Außenwand der Hohlfasern aus Metallen der Gruppen Ia, Ib, IIa, IIb, IIIa, IIIb, IVa, IVb, Vb, VIb, VIIb und/oder VIIIb des Periodensystems, jeweils als Reinmetall oder Legierung aufgebaut ist.

5. Hohlfasern nach Anspruch 1 oder 2,
**dadurch gekennzeichnet,**
**daß** die Außenwand der Hohlfasern aus Glas, Glaskeramiken, SiOₓ, Perowskit, Keramiken, Aluminiumoxiden oder Zirkonoxiden aufgebaut ist.

6. Hohlfasern nach einem der Ansprüche 1 bis 5,
**dadurch gekennzeichnet,**
**daß** die Außenwand der Hohlfasern aus mehreren Schichten aufgebaut ist.

7. Hohlfasern nach einem der Ansprüche 1 bis 6, **gekennzeichnet durch** eine Dielektrizitätskonstante von kleiner 4.

8. Verfahren zur Herstellung von Hohlfasern, wobei eine Faser aus einem ersten, abbaubaren Material mindestens eine Beschichtung aus mindestens einem weiteren Material erhält und anschließend das erste Material mit der Maßgabe abgebaut wird, daß die so erhaltene Hohlfaser einen Innendurchmesser von 1 nm bis 100 nm aufweist, **dadurch gekennzeichnet, dass** das erste abbaubare Material 10 bis 60 Gew.-% Edemetallsalze enthält und /oder zusätzlich eine basische Verbindung enthält.

9. Verfahren nach Anspruch 8 ,
**dadurch gekennzeichnet,**
**daß** das weitere Material aus anorganischen Verbindungen, Polymeren und/oder Metallen aufgebaut ist.

10. Verfahren nach einem der Ansprüche 8 oder 9,
**dadurch gekennzeichnet,**
**daß** das weitere Material aus Poly(p-xylylen), Polyacrylamid, Polyimiden, Polyestern, Polyolefinen, Polycarbonaten, Polyamiden, Polyethern, Polyphenylen, Polysilanen, Polysiloxanen, Polybenzimidazolen, Polybenzthiazolen, Polyoxazolen, Polysulfiden, Polyesteramiden, Polyarylenvinylenen, Polylactiden, Polyetherketonen, Polyurethanen, Polysulfonen, Ormoceren, Polyacrylaten, Siliconen, vollaromatischen Copolyestern, Poly-N-vinylpyrrolidon, Polyhydroxyethylmethacrylat, Polymethylmethacrylat, Polyethylenterephthalat, Polybutylentherephthalat, Polymethacrylnitril, Polyacrylnitril, Polyvinylacetat, Neopren, Buna N, Polybutadien, Polytetrafluorethen, Cellulose (modifiziert oder nichtmodifiziert), Alginaten oder Collagen, deren Homo- oder Copolymerisaten und/oder Blends besteht.

11. Verfahren nach einem der Ansprüche 8 bis 10,
**dadurch gekennzeichnet,**
**daß** das weitere Material aus Metallen der Gruppen Ia, Ib, IIa, IIb, IIIa, IIIb, IVa, IVb, Vb, VIb, VIIb und/oder VIIIb des Periodensystems, jeweils als Reinmetall oder Legierung, besteht.

12. Verfahren nach einem der Ansprüche 8 bis 10,
**dadurch gekennzeichnet,**
**daß** das weitere Material aus Metalloxiden, Glas, Glaskeramiken, SiOₓ, Perowskit, Keramiken, Aluminiumoxiden, Siliziumcarbid, Bornitrid, Kohlenstoff oder Zirkoniumoxiden besteht.

13. Verfahren nach einem der Ansprüche 8 bis 10,
**dadurch gekennzeichnet,**
**daß** das weitere Material durch Polymerisation, Polykondensation oder Polyaddition eines oder mehrerer Monomeren erhalten wird.

14. Verfahren nach Anspruch 13,
**dadurch gekennzeichnet,**
**daß** das weitere Material durch Homo- oder Copolymerisation, -addition oder -kondensation von Methacrylat, Styrol, Styrolsulfonat, 1,6-Hexamethylendiisocyanat (HDI), 4.4'-Methylenbiscyclohexyldiisocyanat (HMDI), 4,4'-Methylenbis-(benzyldiisocyanat) (MDI), 1,4-Butandiol, Ethylendiamin, Ethylen, Styrol, Butadien, Buten-1, Buten-2, Vinylalkohol, Acrylnitril, Methylmethacrylat, Vinylchlorid, Fluorierten Ethylenen und/oder Therephthalat erhalten wird.

15. Verfahren nach einem der Ansprüche 8 bis 14,
**dadurch gekennzeichnet,**
**daß** der Abbau des abbaubaren Materials thermisch, chemisch, biologisch, strahleninduziert, photochemisch, durch Plasma, Ultraschall oder Extraktion mit einem Lösungsmittel erfolgt.

16. Verwendung der Hohlfasern gemäß einem der Ansprüche 1 bis 7 als Separationsmedium oder Speichermedium für Gase, Flüssigkeiten oder Partikelsuspensionen.

17. Verwendung der Hohlfasern gemäß einem der Ansprüche 1 bis 7 in der Dialyse, als künstliche Lunge, Proteinspeicher, Controlled Release oder Drug Delivery System oder in medizinischen Separationstechniken.

18. Verwendung der Hohlfasern gemäß einem der Ansprüche 1 bis 7 in der Zelltechnologie zur Entnahme von Stoffwechselmetaboliten, Enzymen und anderen Komponenten des Zytoplasmas zu ihrer Separierung und/oder Gewinnung von Biopharmaka.

19. Verwendung der Hohlfasern gemäß einem der Ansprüche 1 bis 7 als Sensorbestandteil, als Mikroreaktor oder in der Mikroelektronik als Draht, Kabel oder Kapazität.

20. Verwendung der Hohlfasern gemäß einem der Ansprüche 1 bis 7 in der Superleichtbautechnik, als Verbundwerkstoff, als Füllstoff, als mechanische Verstärkung, als Wärmeisolator oder in der Bekleidungsindustrie.

21. Verwendung der Hohlfasern gemäß einem der Ansprüche 1 bis 7 in Brennstoffzellen, Batterien oder in elektrochemischen Reaktionen.

22. Verwendung der Hohlfasern gemäß einem der Ansprüche 1 bis 7 in der Kapillarelektrophorese, in der Rastersondenmikroskopie oder in katalytischen Systemen.

23. Verwendung der Hohlfasern gemäß einem der Ansprüche 1 bis 7 als Dielektrikum.

24. Verwendung der Hohlfasern gemäß einem der Ansprüche 1 bis 7 als Interlayer Dielektrikum in der Chipherstellung.

## Claims

1. Hollow fibres with an inner diameter from 1 nm to 100 nm and an outer wall made of metal-containing inorganic compounds, polymers and / or metals, wherein the hollow fibres are produced following a method comprising the following steps
• production of a fibre from a first degradable material containing 10 to 60 wt-% of noble metal salts and/or additionally a basic compound,
• coaling of the first fibre with at least one further material,
• degradation of the first material.

2. Hollow fibres according to claim 1,
wherein the inner diameter ranges from 1 nm to 10 nm.

3. Hollow fibres according to claim 1 or 2,
wherein the outer wall of the hollow fibres comprises poly(p-xylylene), polyacrylamide, polyimides, polyesters, polyolefins, polycarbonates, polyamides, polyethers, polyphenylenes, polysilanes, polysiloxanes, polybenzimidazoles, polybenzothiazoles, polyoxazoles, polysulfides, polyester amides, polyarylenevinylenes, polylactides, polyether ketones, polyurethanes, polysulfones, ormocers, polyacrylates, silicones, fully aromatic copolyesters, poly-N-vinylpyrrolidone, polyhydroxyethyl methacrylate, polymethyl methacrylate, polyethylene terephthalate, polybutylene terephthalate, polymethacrylonitrile, polyacrylonitrile, polyvinyl acetate, neoprene, Buna N, polybutadiene, polytetrafluoroethene, cellulose (modified or unmodified), alginates or collagen, their homopolymerisates or copolymerisates and/or blends thereof.

4. Hollow fibres according to claims 1 or 2,
wherein the outer wall of the hollow fibres is made from metals of the groups Ia, Ib, IIa, IIb, IIIa, IIIb, IVa, IVb. Vb, VIb, VIIb and/or VIIIb of the Periodic Table, in the form of pure metal or alloy, respectively.

5. Hollow fibres according to claim 1 or 2,
wherein the outer wall of the hollow fibres is made from glass, glass-ceramics, SiOₓ, perovskite, ceramics, aluminium oxides or zirconium oxides.

6. Hollow fibres according to one of the claims 1 to 5,
wherein the outer wall of the hollow fibres is made from several layers.

7. Hollow fibres according to one of the claims 1 to 6, wherein said fibres have a dielectric constant of less than 4.

8. Method for the production of hollow fibres, wherein one fibre of a first degradable material receives at least one coating of at least one additional material and subsequently the first material is degraded with the aim that the hollow fibre obtained in this way comprises an inner diameter from 1 nm to 1 00 nm, wherein the first degradable material contains 10 to 60 wt-% of noble metal salts and/or additionally a basic compound.

9. Method according to claim 8,
wherein the further material is made from inorganic compounds, polymers and/or metals.

10. Method according to one of the claims 8 or 9,
wherein the further material comprises poly(p-xylylene), polyacrylamide, polyimides, polyesters, polyolefins, polycarbonates, polyamides, polyethers, polyphenylene, polysilanes, polysiloxanes, polybenzimidazoles, polybenzothiazoles, polyoxazoles, polysulfides, polyester amides, polyarylenevinylenes, polylactides, polyether ketones, polyurethanes, polysulfones, ormocers, polyacrylates, silicones, fully aromatic copolyesters, poly-N-vinylpyrrolidone, polyhydroxyethyl methacrylate, polymethyl methacrylate, polyethylene terephthalate, polybutylene terephtalate, polymethacrylonitrile, polyacrylonitrile, polyvinyl acetate, neoprene, buna N, polybutadiene, polytetrafluoroethene, cellulose (modified or unmodified), alginates or collagen, their homopolymerisates or copolymerisates and/or blends thereof.

11. Method according to one of the claims 8 to 10,
wherein the further material is made from metals of the groups la, Ib, IIa, IIb, IIIa, IIIb, IVa, IVb, Vb, VIb, VIIb and/or VIIIb of the Periodic Table, in the form of pure metal or alloy respectively.

12. Method according to one of the claims 8 to 10,
wherein the further material is made from metal oxides, glass, gliss-ceramics, SiOₓ, perovskite, ceramics, aluminium oxides, silicon carbide, bornitride, carbon or zirconium oxides.

13. Method according to one of the claims 8 to 10.
wherein the further material is obtained by polymerisation, polycondensation or polyaddition of one or several monomers.

14. Method according to claim 13,
wherein the further material is obtained by homo- or copolymerisation, -addition or -condensation of methacrylate, styrene, styrene sulfonate, 1,6-hexamethylene diisocyanate (HDI), 4,4'-methylenebiscyclohexyl diisocyanate (HMDI), 4,4'-methylenebis(benzyl diisocyanate) (MDI), 1,4-butanediol, ethylenediamine, ethylene, styrene, butadiene, 1-butene, 2-butene, vinyl alcohol, acrylonitrile, methyl methacrylate, vinyl chloride, fluorinated ethylenes and/or terephthalate.

15. Method according to one of the claims 8 to 14,
wherein the degradation of the degradable material is carried out thermally, chemically, biologically, radiation-induced, photochemically, by means of plasma, ultrasound or extraction with a solvent.

16. Use of the hollow fibres according to one of the claims 1 to 7 as a separation medium or a storage medium for gases, liquids or particle suspensions.

17. Use of the hollow fibres according to one of the claims 1 to 7 in dialysis, as artificial lung, protein store, a controlled release or drug delivery system or in medical separation techniques.

18. Use of the hollow fibres according to one of the claims 1 to 7 in cell technology to extract metabolites, enzymes and other components of the cytoplasma for their separation and/or production of biopharmaceuticals.

19. Use of the hollow fibres according to one of the claims 1 to 7 as a sensor constituent, microreactor or in microelectronics as a wire, cable or capacitor.

20. Use of the hollow fibres according to one of claims 1 to 7 in the super-lightweight construction, as composite material, filler, mechanical reinforcement, heat insulator or in the clothing industry.

21. Use of the hollow fibres according to one of the claims 1 to 7 in fuel cells, batteries or electrochemical reactions.

22. Use of the hollow fibres according to one of the claims 1 to 7 in capillary electrophoresis, in scanning probe microscopy or in catalytic systems.

23. Use of the hollow fibres according to one of the claims 1 to 7 as dielectric material.

24. Use of the hollow fibres according to one of the claims 1 to 7 as a dielectric interlayer in the chip production.

## Revendications

1. Fibres creuses avec un diamètre intérieur de 1 nm à 100 nm et une paroi extérieure, révisée à partir de composés anorganiques contenant du métal, de polymères et/ou de métaux, **caractérisées en ce que** les fibres creuses sont produites selon un procédé comportant les étapes suivantes
• production d'une fibre à partir d'un premier matériau dégradable, contenant de 10 à 60% en poids des sels de métaux précieux et/ou de plus un composé basique,
• revêtement de la première fibre d'au moins un matériau supplémentaire,
• dégradation du premier matériau.

2. Fibres creuses selon la revendication 1,
**caractérisées en ce que**
le diamètre intérieur est de 1 nm à 10 nm.

3. Fibres creuses selon la revendication 1 ou 2,
**caractérisées en ce que**
la paroi extérieure des fibres creuses est réalisée à partir de poly(p-xylylène), de polyocrylamide, de polyimides, de polyesters, de polyoléfine, de polycarbonates, de polyamides, de polyéthers, de polyphénylène, de polysilanes, de polysiloxanes, de polybenzimidazoles, de polybenzothiazoles, de polyoxazoles, de polysulfides, de polyesteramides, de polyarylène-vinylènes, de polylactides, de polyéthercétones, de polyuréthanes, de polysulfones, d'ormocers, de polyacrylates, de silicones, de copolyesters entièrement aromatiques, de poly-N-vinyle-pyrrolidone, de polyhydroxyéthylméthacrylate, de polyméthylméthacrylate, de polyéthylène téréphthalate, de polybutylène téréphthalate, de polyméthacrylonitrile, de polyacrylonitrile, de polyvinylacétate, de néoprène, de Buna N, de polybutadiène, de polytétrafluoroéthène, de cellulose (modifiée ou non modifiée), d'alginates ou de collagène, de leurs homopolymérisats ou leurs copolymérisats et/ou de leurs mélanges.

4. Fibres creuses selon la revendication 1 ou 2,
**caractérisées en ce que**
la paroi extérieure des fibres creuses est composée à partir de métaux des groupes Ia, Ib, IIa, IIb, IIIa, IIIb, IVa, IVb, Vb, VIb, VIIb et/ou VIIIb du tableau périodique, respectivement comme métal pur ou alliage.

5. Fibres creuses selon la revendication 1 ou 2,
**caractérisées en ce que**
la paroi extérieure des fibres creuses est réalisée à partir de verre, de vitrocéramiques, de SiOₓ, de pérowskite, de céramiques, d'oxydes d'aluminium ou d'oxydes de zirconium.

6. Fibres creuses selon une des revendications 1 à 5,
**caractérisées en ce que**
la paroi extérieure des fibres creuses est composée de plusieurs couches.

7. Fibres creuses selon une des revendications 1 à 6, **caractérisées par** une constante diélectrique inférieure à 4.

8. Procédé de production des fibres creuses dans lequel une fibre composée d'un premier matériau dégradable reçoit au moins un revêtement d'au moins un matériau supplémentaire et qu'ensuite ce premier matériau est dégradé de telle sorte que la fibre creuse ainsi obtenue présente un diamètre intérieur de 1 nm à 100 nm, **caractérisé en ce que** le premier matériau dégradable contient de 10 à 60% en poids des sels de métaux précieux et/ou de plus un composé basique.

9. Procédé selon la revendication 8,
**caractérisé en ce que**
le matériau supplémentaire est réalisé à partir de composés inorganiques, de polymères et/ou de métaux.

10. Procédé selon une des revendications 8 ou 9,
**caractérisé en ce que**
le matériau supplémentaire est réalise à partir de poly(p-xylyléne), de polyacrylamide, de polyimides, de polyesters, de polyoléfine, de polycarbonates, de polyamides, de polyéthers, de polyphénylène, de polysilanes, de polysiloxanes, de polybenzimidazoles, de polybenzothiazoles, de polyoxazoles, de polysulfides, de polyesteramides, de polyarylène-vinylènes, de polylactides, de polyéthercétones, de polyuréthanes, de polysulfones, d'ormocers, de polyacrylates, de silicones, de copolyesters entièrement aromatiques, de poly-N-vinyle-pyrrolidone, de polyhydroxyéthylméthacrylate, de polyméthylméthacrylate, de polyéthylène téréphthalate, de polybutylène téréphthalate, de polyméthacrylonitrile, de polyacrylonitrile, de polyvinylacétate, de néoprène, de Buna N, de polybutadiène, de polytétrafluoroéthène, de cellulose (modifiée ou non modifiée), d'alginates ou de collagène, de leurs homopolymérisats ou de leurs copolymérisats et/ou de leurs mélanges.

11. Procédé selon une des revendications 8 ou 10,
**caractérisé en ce que**
le matériau supplémentaire est composé à partir de métaux des groupes Ia, Ib, IIa, IIb, IIIa, IIIb, IVa, IVb, Vb, Vlb, VIIb et/ou VIIIb du tableau périodique, respectivement comme métal pur ou alliage.

12. Procédé selon une des revendications 8 à 10,
**caractérisé en ce que**
le matériau supplémentaire est composé à partir d'oxydes métalliques, de verre, de vitrocéramiques, de SiOₓ, de pérowskite, de céramiques, d'oxydes d'aluminium, de carbure de silicium, de nitrure de bore, de carbone ou d'oxydes de zirconium,

13. Procédé selon une des revendications 8 à 10,
**caractérisé en ce que**
le matériau supplémentaire est obtenu par polymérisation, polycondensation ou polyaddition d'un ou plusieurs monomères.

14. Procédé selon la revendication 13,
**caractérisé en ce que**
le matériau supplémentaire est obtenu par homo- ou copolymérisation, par homo- ou copolyaddition ou par homo- ou copolycondensation de méthacrylate, de styrène, de sulfonate de styrène, de 1,6-hexaméthylène diisocyanate (HDI), de 4,4'-méthylène biscyclohexyle diisocyanate (HMDI), de 4,4'-méthyléne-bis-(benzyl diisocyanate) (MDI), de 1,4-butandiole, d'éthylènediamine, d'éthylène, de styrène, de butadiène, de butène-1, de butène-2, de vinylalcool, d'acrylonitrile, de méthylméthacrylate, de chlorure de vinyle, d'éthylènes fluorés et/ou de téréphthalate.

15. Procédé selon une des revendications 8 à 14,
**caractérisé en ce que**
la dégradation du matériau dégradable se fait suivant un procédé thermique, chimique, biologique, induit par rayons, photochimique, par plasma, ultrason ou extraction avec un solvant.

16. Utilisation des fibres creuses selon une des revendications 1 à 7 comme milieu de séparation ou milieu d'accumulation pour les gaz, les liquides ou les particules en suspension.

17. Utilisation des fibres creuses selon une des revendications 1 à 7 dans la dialyse, comme poumon artificiel, comme réservoir de protéines, comme système d'apport ou de libération contrôlée (controlled release) ou drug delivery system des médicaments ou dans des techniques médicales de séparation.

18. Utilisation des fibres creuses selon une des revendications 1 à 7 dans la technologie cellulaire pour le prélèvement de produits métaboliques, d'enzymes et d'autres composantes du cytoplasme en vue de leur séparation et/ou de l'obtention de produits pharmaceutiques biologiques.

19. Utilisation des fibres creuses selon une des revendications 1 à 7 comme composant de capteur, comme microréacteur ou dans la microélectronique comme fil, câble ou capacité.

20. Utilisation des fibres creuses selon une des revendications 1 à 7 dans la technique de construction superlégère, comme matériau composite, comme matière de remplissage, comme renforcement mécanique, comme isolateur de chaleur ou dans l'industrie du vêtement.

21. Utilisation des fibres creuses selon une des revendications 1 à 7 dans des cellules de combustible, dans des piles ou dans des réactions électrochimiques.

22. Utilisation des fibres creuses selon une des revendications 1 à 7 dans l'électrophorèse capillaire, dans la microscopie à champ proche ou dans des systèmes catalyliques.

23. Utilisation des fibres creuses selon une des revendications 1 à 7 comme diélectrique.

24. Utilisation des fibres creuses selon une des revendications 1 à 7 comme diélectrique inter-couche dans la fabrication de puces.
